# EUROPÄISCHE PATENTSCHRIFT

(11) **EP 1 737 063 B1**
(45) Veröffentlichungstag und Bekanntmachung des Hinweises auf die Patenterteilung: **30.03.2016**
(21) Anmeldenummer: 06011128.3
(22) Anmeldetag: 30.05.2006
(51) Int. Cl.: H01M 10/48

(54) **Energieversorgungseinrichtung für ein Flurförderzeug**
Energy supply system for an industrial truck
Dispositif d'alimentation en énergie pour un chariot de manutention

(30) Priorität: 22.06.2005 DE 102005029316
(43) Veröffentlichungstag der Anmeldung: 27.12.2006
(73) Patentinhaber: STILL GmbH, 22113 Hamburg (DE)
(72) Erfinder: Bergmann, Ansgar, 22941 Bargteheide (DE)
(74) Vertreter: Geirhos, Johann

(56) Entgegenhaltungen:
- US-A- 1 358 827
- US-A- 4 388 584
- US-A- 4 803 459
- US-A- 5 345 163
- US-A- 5 550 474
- US-A- 6 121 755

## Beschreibung

Die Erfindung betrifft eine austauschbare Energieversorgungseinrichtung für ein Flurförderzeug, wobei die Energieversorgungseinrichtung als Batterie ausgebildet ist und eine Kabelverbindung zwischen dem Flurförderzeug und der austauschbaren Energieversorgungseinrichtung aufweist, wobei die Kabelverbindung aus Anschlusskabeln und einem batterieseitigen Anschlußstecker besteht und die Kabelverbindung die elektrische Verbindung zwischen dem Flurförderzeug und der Energieversorgungseinheit herstellt.

Austauschbare Energieversorgungseinrichtungen sind in Flurförderzeugen zumeist als Batterien ausgeführt. Im Gegensatz zu fest installierten Batterien können diese, sobald der Ladezustand ein bestimmtes Maß unterschritten hat, relativ schnell gegen eine geladene Batterie ausgetauscht werden, wodurch unproduktive Standzeiten des Flurförderzeugs reduziert werden. Die Verbindung zwischen Flurförderzeug und Batterie wird dabei mit einer Kabelverbindung hergestellt, die batterieseitig im elektrischen Teil neben den eigentlichen Anschlusskabeln noch einen genormten Batteriestecker umfasst, der eine einfache Verbindung zum Flurförderzeug ermöglicht.

Insbesondere bei den in Flurförderzeugen häufig verwendeten wartungsarmen Batterien ist es wichtig, den Benutzer über den Zustand der Batterie zu informieren. Die Temperatur und der Flüssigkeitsstand in der Batterie sind wichtige Kenngrößen, um den Zustand der Batterie zu beurteilen und diese gegebenenfalls rechtzeitig auszutauschen. Hierzu sind bei Batterien nach dem Stand der Technik häufig Anzeigeelemente, zumeist in Form von Leuchtdioden, am Rand oder in der Mitte des Batterietrogs vorgesehen. Diese Anzeigeelemente sind für den Benutzer im Betrieb jedoch schwer einzusehen und damit schlecht zu überwachen. Zudem sammelt sich im Lauf des Betriebs im Batterietrog häufig Schmutz an, der die Anzeigeelemente verdecken oder sogar beschädigen kann. Auch beim Nachfüllen von Batterieflüssigkeit können im Bereich des Batterietroges angebrachte Anzeigevorrichtungen leicht beschädigt werden. Bei einer Anbringung der Anzeigeelemente im Randbereich des Batterietroges besteht zudem die Gefahr, dass diese beispielsweise beim Batteriewechsel Schaden nehmen.

Werden die Anzeigeelemente im Bereich des Fahrerplatzes angebracht, beispielsweise als Leuchtdiode am Armaturenbrett oder in Form einer Anzeige in einem Display des Fahrzeuges, sind diese für die Bedienperson optimal ablesbar. Allerdings muss hierzu das Flurförderzeug über die entsprechenden Einrichtungen verfügen, d.h. es muss beispielsweise zumindest eine zusätzliche Leitung zur Übertragung der Zustandsparameter vorgesehen sein. Dies erhöht den Aufwand sowohl bei der Herstellung des Flurförderzeugs als auch beim Wechsel der Batterie, da eine zusätzliche Verbindung zwischen Flurförderzeug und Batterie hergestellt werden muss.

Aus der US 5 345 163 ist ein Flurförderzeug bekannt, bei dem eine Anzeigevorrichtung mittels der der Zustand der Batterie dem Benutzer angezeigt werden kann, an dem Armaturenbrett eines Flurförderzeugs angeordnet und befestigt ist.

Die US 1 358 827 zeigt eine Anziegeeinrichtung, die zur Anzeige des Zustands einer Batterie vorgesehen ist und an einem Armaturenbrett eines Fahrzeugs angeordnet und befestigt ist. Die Anzeigeeinrichtung steht hierbei mittels Verbindungsschläuchen mit den Batteriezellen der Batterie in Verbindung, um das Elektzrolyt der Batteriezellen in die Anzeigeeinrichtung zu fördern, in der die Temperatur des Elektrolyts, der Elektrolyt-Füllstand der Batteriezellen und die Dichte des Elektolyts gemessen werden kann.

Der Erfindung liegt daher die Aufgabe zugrunde, eine Energieversorgungseinrichtung für ein Flurförderzeug mit mindestens einer Kabelverbindung zwischen dem Flurförderzeug und der austauschbaren Energieversorgungseinrichtung zu schaffen, die eine einfache Information über Zustandsparameter der Energieversorgungseinheit bietet, robust ist und universell bei verschiedenen Flurförderzeugen eingesetzt werden kann.

Diese Aufgabe wird erfindungsgemäß dadurch gelöst, dass an der Kabelverbindung mindestens eine Anzeigevorrichtung zur Anzeige mindestens eines Zustandsparameters der Energieversorgungseinrichtung, insbesondere einer Temperatur und/oder eines Flüssigkeitsstandes, angeordnet ist. Indem die Anzeigevorrichtung an der Kabelverbindung angeordnet ist, sind keine aufwändigen technischen Einrichtungen am Flurförderzeug notwendig, um die Zustandsparameter zu signalisieren. Weiterhin ist die Anzeigevorrichtung außerhalb des Batterietroges angeordnet und damit gegenüber Verschmutzung und Beschädigung geschützt.

In einer vorteilhaften Ausgestaltung der Erfindung ist die Anzeigevorrichtung im Bereich mindestens eines Anschlusskabels der Kabelverbindung angeordnet. Die Kabel der Kabelverbindung weisen zumeist eine gewisse Steifigkeit auf, sind aber dennoch hinreichend flexibel, so dass die Anzeigevorrichtung durch eine leichte Verformung der Kabel in eine günstige Ableseposition gebracht werden kann. Wird die Energieversorgungseinrichtung in verschiedenen Typen Flurförderzeugen benutzt, kann so die Anordnung der Anzeigevorrichtung auf einfachem Weg angepasst werden.

Es ist zweckmäßig, wenn die Anzeigevorrichtung mittels einer Klemmvorrichtung an mindestens einem Anschlusskabel der Kabelverbindung befestigbar ist. Dadurch kann die Anzeigevorrichtung auch nachträglich an bestehenden Batterien angebracht werden, Zudem ist die Klemmverbindung leicht lösbar, so dass die Anzeigevorrichtung entlang des Kabels an einer besonders günstigen Stelle positioniert werden kann.

In einer vorteilhaften Weiterbildung der Erfindung ist die Klemmvorrichtung aus mindestens einer Halbschale mit mindestens einer halbkreisförmigen Aussparung gebildet. Derartige Halbschalen sind einfach zu fertigen, beispielsweise aus Kunststoff, Durch die halbkreisförmigen Aussparungen wird ein guter Halt am Kabel erzielt, ohne dass dieses zu sehr verformt oder gar ernsthaft beschädigt wird.

In einer weiteren vorteilhaften Ausgestaltung der Erfindung ist die Anzeigevorrichtung im Bereich des Anschlusssteckers angeordnet, insbesondere als Bestandteil des Anschlusssteckers ausgebildet. Anschlussstecker erlauben eine einfache und schnelle Verbindung von der Batterie zum Flurförderzeug und sind daher bei Wechselbatterien Bestandteil der Kabelverbindung. Das Gegenstück des Anschlusssteckers am Flurförderzeug ist zumeist gut erreichbar angebracht und damit an einer Stelle, an der die Anzeigevorrichtung auch gut ablesbar ist. Wird die Anzeigevorrichtung in den Anschlussstecker integriert, wird zudem ein besonders einfacher Aufbau mit wenigen Teilen erreicht.

Vorteilhafterweise ist die Anzeigevorrichtung als optische Anzeigevorrichtung ausgebildet. Optische Anzeigevorrichtungen sind einfach und schnell ablesbar.

In einer vorteilhaften Weiterbildung der Erfindung umfasst die Anzeigevorrichtung mindestens eine Leuchtdiode. Leuchtdioden eignen sich besonders gut für Anzeigeelemente, da sie kostengünstig, robust, in verschiedenen Farben und Größen verfügbar und auch unter ungünstigen Umgebungsbedingungen gut ablesbar sind und zudem wenig Energie verbrauchen.

In einer weiteren vorteilhaften Ausbildung der Erfindung ist die Anzeigevorrichtung als akustische Anzeigevorrichtung ausgebildet. Akustische Signale können auch wahrgenommen werden, wenn kein direkter Sichtkontakt zur Anzeigevorrichtung besteht. Damit eignen sie sich insbesondere, um auf das Vorhandensein einer Gefahrensituation hinzuweisen, also beispielsweise auf das Überschreiten einer zulässigen Höchsttemperatur oder eines minimalen Flüssigkeitsstandes.

In einer vorteilhaften Weiterbildung der Erfindung umfasst die Anzeigevorrichtung und/oder die Klemmvorrichtung mindestens eine Vorrichtung zur Übertragung von Zustandsparametern der Energieversorgungseinheit, insbesondere eine Anschlusssteckdose für eine Diagnosevorrichtung. Dadurch können auch größere Datenmengen, beispielsweise umfangreiche Parametersätze oder die Entwicklung eines Parameters über einen gewissen Zeitraum, mittels eines geeigneten Lesegeräts, beispielsweise eines speziellen Diagnosegeräts, erfasst und ausgewertet werden.

Zweckmäßigerweise ist die Energieversorgungseinrichtung als wartungsarme Batterie ausgebildet. Derartige Batterien werden bei Flurförderzeugen häufig verwendet. Wird der Zustand der Batterie nicht hinreichend überwacht, können schwere Schäden entstehen.

Weitere Vorteile und Einzelheiten der Erfindung werden im Folgenden anhand des in der Zeichnung dargestellten Ausführungsbeispiels näher erläutert. Gleiche Teile sind mit gleichen Bezugszeichen gekennzeichnet. Dabei zeigt
- Figur 1: eine Batterie als Beispiel einer erfindungsgemäßen Energieversorgungseinheit,
- Figur 2: eine im Flurförderzeug eingebaute erfindungsgemäße Batterie
- Figur 3: eine Kabelverbindung einer erfindungsgemäßen Energieversorgungseinheit.

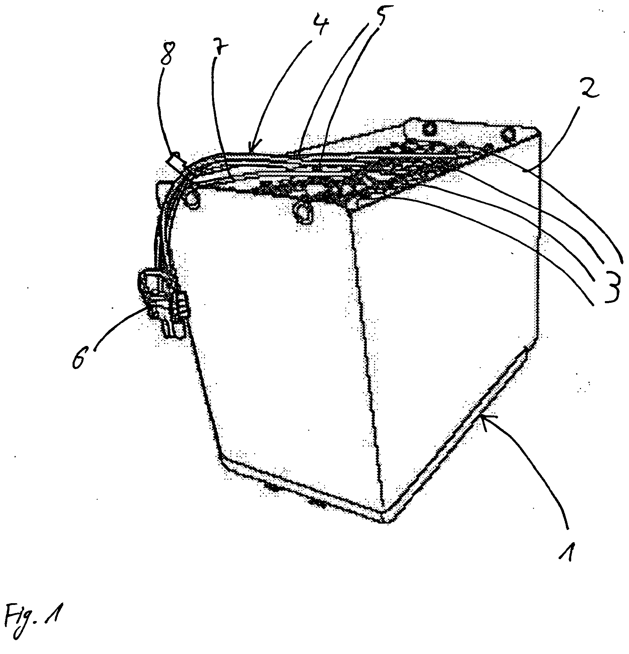

Figur 1 zeigt eine erfindungsgemäße Batterie 1 eines Flurförderzeugs. In einem so genanten Batterietrog 2 sind einzelne Batteriezellen 3 angeordnet. Die einzelnen Batteriezellen 3 sind so miteinander verschaltet, dass die gewünschte Ausgangsspannung erreicht wird. Über eine Kabelverbindung 4 wird die Batterie 1 mit dem hier nicht dargestellten Flurförderzeug verbunden. Die Kabelverbindung 4 besteht aus Anschlusskabeln 5 und einem Anschlussstecker 6, der am flurförderzeugseitigen Ende der Anschlusskabel 5 angeordnet ist. Zusätzlich ist zwischen den Anschlusskabeln 5 noch ein Schlauch 7 angeordnet, mit dem durch Nachfüllen von Wasser der Elektrolytstand eingestellt werden kann. Ebenfalls an den Anschlusskabeln 5 angeordnet ist eine erfindungsgemäße Anzeigevorrichtung 8.

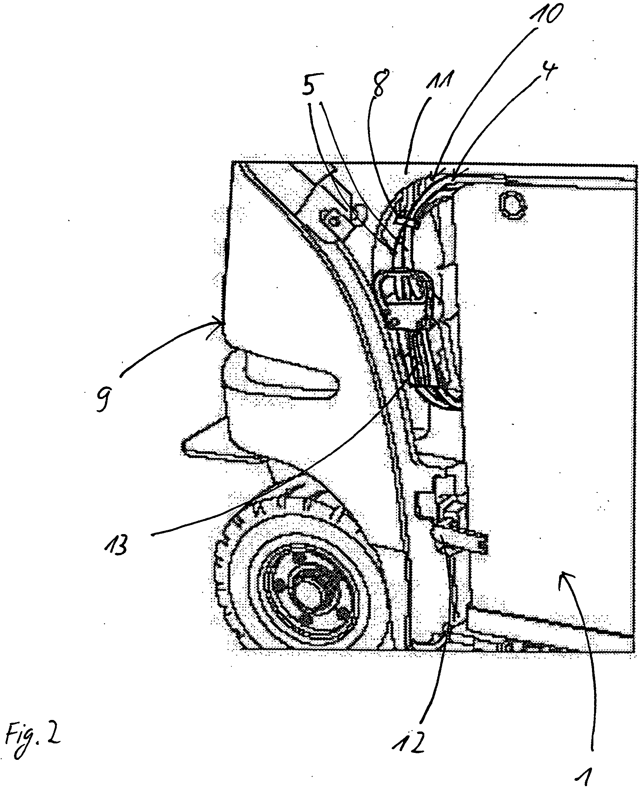

Figur 2 zeigt die Anordnung der Batterie 1 in einem Flurförderzeug 9. Beim gezeigten Flurförderzeug 9 wird die Batterie 1 seitlich durch eine Ausnehmung 10 im Rahmen 11 des Flurförderzeugs 9 in das Flurförderzeug 9 eingeführt und mittels einer Haltevorrichtung 12 gesichert. Durch eine hier nicht dargestellte Klappe kann die Ausnehmung 10 verschlossen werden. Die elektrische Verbindung zwischen Flurförderzeug 9 und Batterie 1 wird mittels der Kabelverbindung 4 hergestellt, indem der batterieseitige Anschlussstecker 6 mit einem flurförderzeugseitigen Anschlussstecker 13 verbunden wird. Die erfindungsgemäße Anzeigevorrichtung 8 ist so an den Anschlusskabeln 5 angeordnet, dass das Ablesen nach Öffnen der hier nicht dargestellten Klappe jederzeit leicht vorgenommen werden kann.

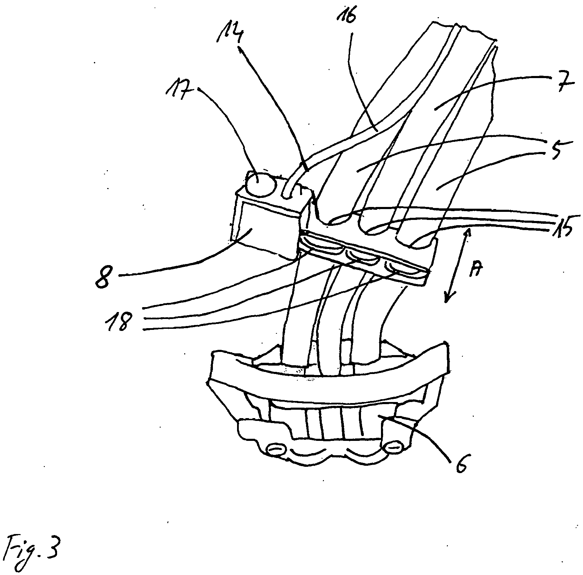

Figur 3 zeigt die Anbringung der erfindungsgemäßen Anzeigevorrichtung 8 an der Kabelverbindung 4. Eine Klemmvorrichtung 14, die drei halbkreisförmige Ausnehmungen 15 aufweist, trägt die eigentliche Anzeigevorrichtung 8, die über ein Kabel 16 mit der Batterie 1 in Wirkverbindung steht. Die Anzeigevorrichtung 8 weist eine Leuchtdiode 17 auf und wird über eine hier nicht dargestellte Elektronikeinheit betrieben, die am Batterietrog 2 angebracht ist. Diese Elektronikeinheit erhält von ebenfalls nicht dargestellten Sensoren Messwerte für verschiedene Zustandsparameter der Batterie. Im vorliegenden Ausführungsbeispiel ist dies der Elektrolytfüllstand der Batterie, es sind jedoch auch Ausführungen denkbar, die die Temperatur, den Ladezustand, Betriebsstunden oder andere für den Betrieb der Batterie relevanten Parameter einzeln oder in beliebiger Kombination anzeigen.

Bei korrektem Füllstand zeigt die blinkende Leuchtdiode 17 die Betriebsbereitschaft der Anzeigevorrichtung 8 an. Überschreitet der überwachte Parameter einen vorgegebenen Grenzwert, d.h. sinkt der Flüssigkeitsstand unter ein vorgegebenes Niveau, leuchtet die Leuchtdiode 17 dauerhaft. Selbstverständlich sind auch andere Ausführungsformen der Anzeige nach dem Stand der Technik denkbar, beispielsweise durch eine Anordnung verschiedenfarbiger Leuchtdioden, sinnvollerweise im Muster einer Ampel, womit durch jeweils eine grüne eine gelbe und eine rote Leuchtdiode der Übergang von einem normalen über einen ungünstigen zu einem kritischen Zustand signalisiert werden kann. Komplexere Anzeigen, beispielsweise mit einem Display, sind je nach Anwendungsfall ebenfalls möglich. Auch eine akustische Wamvorrichtung, die bei Eintreten eines kritischen Zustandes einen Wamton abgibt, ist denkbar.

Die Klemmvorrichtung 14 ist als Kunststoffformteil ausgeführt und im gezeigten Ausführungsbeispiel mittels dreier Kabelbinder 18 an den Kabeln 5 sowie dem Wasserschlauch 7 befestigt. Es sind jedoch auch andere Ausführungen denkbar, beispielsweise mit einem auf der der Klemmvorrichtung 14 abgewandten Seite der Kabel 5 angeordneten zweiten Klemmteil, das beispielsweise durch eine Schraubverbindung oder eine Schnappverbindung fixiert werden kann. Das zweite Klemmteil kann als eigenständiges Bauteil ausgeführt oder aber durch ein Filmscharnier mit der Klemmvorrichtung 14 einstückig ausgebildet sein. Eine Schraubverbindung bietet ebenso wie die Fixierung der Klemmvorrichtung 14 mittels Kabelbindern den Vorteil, dass damit der Grad der Fixierung der Klemmvorrichtung 14 auf den Kabeln 5 in gewissen Grenzen einstellbar ist, d.h. wenn die Batterie 1 nur einem Typ von Flurförderzeug eingesetzt wird und demzufolge nur eine Position der Anzeigevorrichtung 8 von Nöten ist, kann die Klemmvorrichtung 14 relativ fest auf den Kabeln 5 fixiert werden. Wird die Batterie 1 hingegen bei verschiedenen Typen von Flurförderzeugen eingesetzt, in denen jeweils eine andere Position der Anzeigevorrichtung 8 von Vorteil ist, wird die Klemmvorrichtung 14 weniger stark auf den Kabeln 5 fixiert sein, um dadurch eine einfachere Anpassung durch Verschieben der Klemmvorrichtung 14 in Richtung des Pfeils A auf den Kabeln 5 zu erreichen.

Wird die Batterie 1 beispielsweise nur bei Fahrzeugen eingesetzt, bei denen der fahrzeugseitige Anschlussstecker 13 leicht zugänglich beziehungsweise einsehbar ist, kann eine weitere Ausführungsform der Erfindung vorteilhaft sein, bei der die Anzeigevorrichtung 8 im Bereich des batterieseitigen Anschlusssteckers 6 angeordnet ist. Insbesondere bei einer Integration der Anzeigevorrichtung 8 im batterieseitigen Anschlussstecker 6 kann die Einsparung von Bauteilen Vorteile bieten.

Selbstverständlich sind auch andere Ausführungsformen der Erfindung denkbar, beispielsweise, indem die Auswerteelektronik für die Batterieparameter in die Anzeigevorrichtung 8 integriert ist und mit den Batteriesensoren über das Kabel 16 in Wirkverbindung steht. Auch eine Integration einer Vorrichtung zur Übertragung von Zustandsparametern der Batterie 1 in die Anzeigevorrichtung 8 oder in die Klemmvorrichtung 14 ist denkbar. Über eine derartige Schnittstellenvorrichtung, beispielsweise eine Steckverbindung oder eine drahtlose Übertragungseinheit, können so mittels eines geeigneten Diagnosegeräts weitere Parameter der Batterie 1, die von der Anzeigevorrichtung 8 nicht oder nur teilweise wiedergegeben werden, ausgelesen und ausgewertet werden.

## Patentansprüche

1. Austauschbare Energieversorgungseinrichtung (1) für ein Flurförderzeug (9), wobei die Energieversorgungseinrichtung (1) als Batterie ausgebildet ist und mindestens eine Kabelverbindung (4) zwischen dem Flurförderzeug (9) und der austauschbaren Energieversorgungseinrichtung (1) aufweist, wobei die Kabelverbindung (4) aus Anschlusskabeln (5) und einem batterieseitigen Anschlußstecker (6) besteht und die Kabelverbindung (4) die elektrische Verbindung zwischen dem Flurförderzeug (9) und der Energieversorgungseinheit (1) herstellt, **dadurch gekennzeichnet, dass** an der Kabelverbindung (4) mindestens eine Anzeigevorrichtung (8) zur Anzeige mindestens eines Zustandsparameters der Energieversorgungseinrichtung (1), insbesondere einer Temperatur und/oder eines Flüssigkeitsstandes, angeordnet ist.

2. Austauschbare Energieversorgungseinrichtung (1) nach Anspruch 1, **dadurch gekennzeichnet, dass** die Anzeigevorrichtung (8) im Bereich mindestens eines Anschlusskabels (5) der Kabelverbindung angeordnet ist.

3. Austauschbare Energieversorgungseinrichtung (1) nach Anspruch 1 oder 2, **dadurch gekennzeichnet, dass** die Anzeigevorrichtung (8) mittels einer Klemmvorrichtung (14) an mindestens einem Anschlusskabeln (5) der Kabelverbindung (4) befestigbar ist.

4. Austauschbare Energieversorgungseinrichtung (1) nach Anspruch 3, **dadurch gekennzeichnet, dass** die Klemmvorrichtung (14) aus mindestens einer Halbschale (14) mit mindestens einer halbkreisförmigen Aussparung (15) gebildet ist.

5. Austauschbare Energieversorgungseinrichtung (1) nach Anspruch 1, **dadurch gekennzeichnet, dass** die Anzeigevorrichtung (8) im Bereich des Anschlusssteckers (6) angeordnet ist, insbesondere als Bestandteil des Anschlusssteckers (6) ausgebildet ist.

6. Austauschbare Energieversorgungseinrichtung (1) nach einem der Ansprüche 1 bis 5, **dadurch gekennzeichnet, dass** die Anzeigevorrichtung (8) als optische Anzeigevorrichtung (8) ausgebildet ist.

7. Austauschbare Energieversorgungseinrichtung (1) nach einem der Ansprüche 1 bis 6, **dadurch gekennzeichnet, dass** die Anzeigevorrichtung (8) mindestens eine Leuchtdiode (17) umfasst.

8. Austauschbare Energieversorgungseinrichtung (1) nach einem der Ansprüche 1 bis 7, **dadurch gekennzeichnet, dass** die Anzeigevorrichtung (8) als akustische Anzeigevorrichtung ausgebildet ist.

9. Austauschbare Energieversorgungseinrichtung (1) nach einem der Ansprüche 1 bis 3, **dadurch gekennzeichnet, dass** die Anzeigevorrichtung (8) und/oder die Klemmvorrichtung (14) mindestens eine Vorrichtung zur Übertragung von Zustandsparametern der Energieversorgungseinheit (1), insbesondere eine Anschlusssteckdose für eine Diagnosevorrichtung, umfasst.

10. Austauschbare Energieversorgungseinrichtung (1) nach einem der Ansprüche 1 bis 3, **dadurch gekennzeichnet, dass** die Energieversorgungseinrichtung (1) als wartungsarme Batterie (1) ausgebildet ist.

## Claims

1. Replaceable power supply device (1) for an industrial truck (9), wherein the power supply device (1) is in the form of a battery and has at least one cable connector (4) between the industrial truck (9) and the replaceable power supply device (1), wherein the cable connector (4) comprises connection cables (5) and a battery-end connection plug (6), and the cable connector (4) establishes the electrical connection between the industrial truck (9) and the power supply unit (1), **characterized in that** at least one indicator apparatus (8) for indicating at least one state parameter of the power supply device (1), in particular a temperature and/or a liquid level, is arranged on the cable connector (4).

2. Replaceable power supply device (1) according to Claim 1, **characterized in that** the indicator apparatus (8) is arranged in the region of at least one connection cable (5) of the cable connector.

3. Replaceable power supply device (1) according to Claim 1 or 2, **characterized in that** the indicator apparatus (8) can be fastened to at least one connection cable (5) of the cable connector (4) by means of a clamping apparatus (14).

4. Replaceable power supply device (1) according to Claim 3, **characterized in that** the clamping apparatus (14) is formed from at least one half-shell (14) with at least one semicircular cutout (15).

5. Replaceable power supply device (1) according to Claim 1, **characterized in that** the indicator apparatus (8) is arranged in the region of the connection plug (6), in particular is in the form of a constituent part of the connection plug (6).

6. Replaceable power supply device (1) according to one of Claims 1 to 5, **characterized in that** the indicator apparatus (8) is in the form of a visual indicator apparatus (8).

7. Replaceable power supply device (1) according to one of Claims 1 to 6, **characterized in that** the indicator apparatus (8) comprises at least one light-emitting diode (17).

8. Replaceable power supply device (1) according to one of Claims 1 to 7, **characterized in that** the indicator apparatus (8) is in the form of an audible indicator apparatus.

9. Replaceable power supply device (1) according to one of Claims 1 to 3, **characterized in that** the indicator apparatus (8) and/or the clamping apparatus (14) comprise/comprises at least one apparatus for transmitting state parameters of the power supply unit (1), in particular a connection plug socket for a diagnosis apparatus.

10. Replaceable power supply device (1) according to one of Claims 1 to 3, **characterized in that** the power supply device (1) is in the form of a low-maintenance battery (1).

## Revendications

1. Dispositif d'alimentation en énergie (1) amovible pour un chariot de manutention (9), le dispositif d'alimentation en énergie (1) étant réalisé sous la forme d'une batterie et comportant au moins une liaison câblée (4) entre le chariot de manutention (9) et le dispositif d'alimentation en énergie (1) amovible, la liaison câblée (4) se composant de câbles de raccordement (5) et d'une fiche de raccordement (6) placée du côté de batterie et la liaison câblée (4) établissant la liaison électrique entre le chariot de manutention (9) et l'unité d'alimentation en énergie (1), **caractérisé en ce qu'**au moins un dispositif d'affichage (8) est disposé au niveau de la liaison câblée (4) pour l'affichage d'au moins un paramètre d'état du dispositif d'alimentation en énergie (1), notamment d'une température et/ou d'un niveau de liquide.

2. Dispositif d'alimentation en énergie (1) amovible selon la revendication 1, **caractérisé en ce que** le dispositif d'affichage (8) est disposé dans la région d'au moins un câble de raccordement (5) de la liaison câblée.

3. Dispositif d'alimentation en énergie (1) amovible selon la revendication 1 ou 2, **caractérisé en ce que** le dispositif d'affichage (8) peut être fixé à au moins un des câbles de raccordement (5) de la liaison câblée (4) au moyen d'un dispositif de serrage (14).

4. Dispositif d'alimentation en énergie (1) amovible selon la revendication 3, **caractérisé en ce que** le dispositif de serrage (14) est formé d'au moins une demi-coque (14) avec au moins un évidement (15) en forme de demi-cercle.

5. Dispositif d'alimentation en énergie (1) amovible selon la revendication 1, **caractérisé en ce que** le dispositif d'affichage (8) est disposé dans la région de la fiche de raccordement (6), notamment réalisé sous la forme d'un composant de la fiche de raccordement (6).

6. Dispositif d'alimentation en énergie (1) amovible selon l'une quelconque des revendications 1 à 5, **caractérisé en ce que** le dispositif d'affichage (8) est réalisé sous la forme d'un dispositif d'affichage (8) optique.

7. Dispositif d'alimentation en énergie (1) amovible selon l'une quelconque des revendications 1 à 6, **caractérisé en ce que** le dispositif d'affichage (8) comprend au moins une diode d'éclairage (17).

8. Dispositif d'alimentation en énergie (1) amovible selon l'une quelconque des revendications 1 à 7, **caractérisé en ce que** le dispositif d'affichage (8) est réalisé sous la forme d'un dispositif d'affichage acoustique.

9. Dispositif d'alimentation en énergie (1) amovible selon l'une quelconque des revendications 1 à 3, **caractérisé en ce que** le dispositif d'affichage (8) et/ou le dispositif de serrage (14) comprend au moins un dispositif de transmission de paramètres d'état de l'unité d'alimentation en énergie (1), notamment une prise électrique de raccordement pour un dispositif de diagnostic.

10. Dispositif d'alimentation en énergie (1) amovible selon l'une quelconque des revendications 1 à 3, **caractérisé en ce que** le dispositif d'alimentation en énergie (1) est réalisé sous la forme d'une batterie (1) à faible entretien.
